# EUROPÄISCHE PATENTSCHRIFT

(11) **EP 1 688 639 B1**
(45) Veröffentlichungstag und Bekanntmachung des Hinweises auf die Patenterteilung: **02.07.2008**
(21) Anmeldenummer: 06000248.2
(22) Anmeldetag: 07.01.2006
(51) Int. Cl.: F16F 13/26, F16F 13/10

(54) **Hydrolager**
Hydraulic support
Support hydraulique

(30) Priorität: 02.02.2005 DE 102005004928
(43) Veröffentlichungstag der Anmeldung: 09.08.2006
(73) Patentinhaber: Carl Freudenberg KG, 69469 Weinheim (DE)
(72) Erfinder: Winkler, Gerold, 69488 Birkenau (DE)

(56) Entgegenhaltungen:
- EP-A- 0 440 260
- EP-A- 0 810 386
- EP-A- 1 614 930
- EP-B- 1 176 336
- DE-A1- 19 958 011
- DE-U1-1202004 008 23

## Beschreibung

### Technisches Gebiet

Die Erfindung betrifft ein Hydrolager gemäß dem Oberbegriff des Patentanspruchs 1.

### Stand der Technik

Derartige Hydrolager sind aus dem Stand der Technik bereits bekannt. Die bekannten Hydrolager verhärten häufig bei Vibrationsfrequenzen, welche durch den Leerlauf eines Kraftfahrzeugmotors angeregt werden. Daher wurden Hydrolager entwickelt, bei denen von einem Dämpfungsbetriebszustand auf einen Tilgungsbetriebszustand umgeschaltet werden kann.

Um im Fahrbetrieb eine gute Akustik im Fahrzeuginnenraum zu erreichen, wird bei Verwendung einiger Hydrolager eine Verbindung zwischen zwei fluidgefüllten Räumen aktiv geöffnet oder geschlossen. Ein solches Hydrolager ist aus der EP 0 840 035 B1 bekannt. Es umfasst eine Kammer, in der eine komprimierbare Schraubenfeder eingebaut ist. Bei Komprimierung der Schraubenfeder wird ein Fluiddurchgang freigegeben. Bei dieser Konstruktion ist eine Schalteinrichtung erheblicher Bauhöhe vorgesehen.

Aus der EP 1 176 336 B1 ist ein Hydrolager bekannt, bei dem zwei fluidgefüllte Räume miteinander verbunden sind. Ein unterer Raum wird durch eine zweite Membran begrenzt, welche in eine seitlich neben diesem angeordnete pneumatische Tilgungskammer ragt und dort einen weiteren Raum bildet. Dieser ist zum unteren Raum zu- oder abschaltbar. Nachteilig bei diesem Hydrolager ist jedoch, dass Tilgungseffekte nur in sehr geringem Maße realisierbar sind, da die Tilgungskammer nur eine geringe Fluidmenge aufnehmen kann.

Aus der EP 0 984 193 B1 ist ein Hydrolager bekannt, bei dem zwei fluidgefüllte Räume miteinander verbunden sind. Dieses Hydrolager umfasst eine biegsame Membran, welche in eine Schaltkammer hineinragt. Die Schaltkammer ist als pneumatische Kammer ausgestaltet. Die Membran ragt jedoch nur geringfügig in die sehr flach ausgebildete Schaltkammer hinein, so dass nur eine geringe Menge an Fluid innerhalb der Schaltkammer aufgenommen werden kann. Tilgungseffekte sind daher nur in geringem Maße realisierbar.

Aus der DE 197 19 352 B4 2004.03.18 ist ein Hydrolager bekannt, bei der ein fluidgefüllter Raum durch eine biegsame Membran von einem gasgefüllten Raum abgetrennt wird. Dieser gasgefüllte Raum ist mit Unterdruck oder Überdruck beaufschlagbar. Die Druckbeauschlagung kann getaktet erfolgen. Nachteilig bei diesem Hydrolager sind lange Zuleitungen und ein großes Volumen der gasgefüllten Kammer.

Aus der EP 0 440 260 A1 ist ein Hydrolager bekannt, in welchem eine Membran nahezu über den gesamten Querschnitt des Hydrolagers gespannt ist. Aus der DE 199 58 011 A1 ist ein Hydrolager mit einem relativ engen Kanal bekannt, der sich in einen Raum größeren Durchmessers erstreckt.

Aus der EP 0 810 386 A2 ist ein Hydrolager bekannt, in welchem ein Dämpfungskanal durch zwei Teilkanäle gebildet ist, die in einer funktionstechnischen Reihenschaltung angeordnet sind. Aus der DE 20 2004 008 231 U1 ist ein Hydrolager bekannt, bei dem ein Kanal einen engeren Querschnitt aufweist, als der Raum, in dem sich die sackartige Membran befindet.

Die bekannten Hydrolager weisen entweder in konstruktiver Hinsicht Nachteile auf oder können keine zufriedenstellenden Tilgungseffekte bewirken.

### Darstellung der Erfindung

Der Erfindung liegt die Aufgabe zugrunde, ein Hydrolager der eingangs genannten Art derart weiterzubilden und auszugestalten, dass dessen schwingungstilgende Eigenschaften durch geeignete Kanalisierung einer beweglichen Fluidmenge problemlos einstellbar sind.

Die vorliegende Erfindung löst die zuvor genannte Aufgabe durch die Merkmale des Patentanspruchs 1. Danach ist ein Hydrolager der eingangs genannten Art dadurch gekennzeichnet, dass die Membran sackartig ausgestaltet ist und die Mittel derart konzentrisch zum Kanal angeordnet sind, dass die Fluidmenge eine Fluidsäule ausbildet, welche an ihrem oberen Ende einen größeren Querschnitt aufweist als an ihrem unteren Ende.

Erfindungsgemäß ist erkannt worden, dass in Verbindung mit einer geschickten Anordnung von Federn die Fluidmasse als solche zur Tilgung von Schwingungen verwendet werden kann. In einem weiteren Schritt ist erkannt worden, dass dies besonders effektiv durch eine schwingende Fluidsäule realisierbar ist. Die Masse dieser Fluidsäule kann durch konstruktive Ausgestaltung des Kanals beeinflusst werden. Schließlich ist erkannt worden, dass ein flexibler Einsatz des Hydrolagers realisierbar ist, indem das Schwingungsverhalten der Federn und der Fluidmasse unter Verwendung einer pneumatischen Schaltkammer ganz in Abhängigkeit der zu dämpfenden Frequenzen aufeinander abstimmbar ist. Insoweit ist ein Hydrolager angegeben, welches bei einfachem konstruktivem Aufbau stets eine flexible Einsatzfähigkeit gewährleistet. Ein solches Hydrolager ist aufgrund seiner konstruktiven Ausgestaltung besonders kostengünstig fertigbar. Die Mittel, welche den Kanal bilden, sind konzentrisch zum Kanal angeordnet. Diese konkrete Ausgestaltung erlaubt erfindungsgemäß die Bildung einer Fluidsäule, welche sich herstellungsbedingt in einer Richtung verjüngt. Hierdurch ist beispielsweise denkbar, eine Übersetzungswirkung im Sinne eines Wagenheberprinzips zu realisieren. Die Fluidsäule weist an ihrem oberen Ende einen größeren Querschnitt auf als an ihrem unteren Ende. Insoweit ist es möglich, auf die flexible Membran, welche sich sackartig in mindestens einen weiteren Raum erstreckt, über den Fluiddruck eine besonders hohe Kraft auf eine Tragfeder auszuüben. Dabei ist denkbar, dass die Mittel, welche den Kanal bilden, als Trennwände ausgebildet oder Teile von Trennwänden oder einer einzelnen Trennwand sind. Dies ermöglicht einen stabilen und konstruktiv einfachen Aufbau des Hydrolagers. Folglich ist die eingangs genannte Aufgabe durch das erfindungsgemäße Hydrolager gelöst.

Es ist denkbar, dass die Federanordnung Trag- und Blähfedern umfasst. Eine Blähfeder kann dabei eine Volumennachgiebigkeit durch Fluiddruck einer tragenden Gummifeder, einer entkoppelnden Membran oder eines anderen Membrantyps herstellen.

Die Mittel könnten als zylindrische Segmente ausgebildet sein. Denkbar ist hierbei, dass der Kanal durch Segmente gebildet wird, welche ein Rohr definieren. Dabei ist insbesondere denkbar, dass die einzelnen Segmente aneinander stoßen und im Bereich der Stoßstellen durch eine Membran gegen weitere Räume abgedichtet sind. Hierdurch ist realisiert, dass die Fluidsäule innerhalb des Kanals nicht in weitere Räume ausweichen kann, sondern sich direkt in den Raum erstreckt, welcher mit der Kammer kommuniziert, und als quasi kompakte Masse schwingen kann.

Die Mittel könnten eine Stützwandung umfassen, an die sich die Membran anlegen kann. Diese konkrete Ausgestaltung realisiert vorteilhaft, dass die Kammer, welche als Tilgerkammer fungiert, räumlich klar definiert wird. Dabei ist insbesondere denkbar, dass die Stützwandung einstückig mit einem Boden ausgebildet ist, an welchen die Membran anlegbar ist. Diese Ausgestaltung ist im Hinblick auf eine lange Lebensdauer der flexiblen Membran von Vorteil, da diese nur definiert und in vergleichsweise geringem Maß gedehnt werden kann.

Insoweit stellen die Stützwandung und der Boden begrenzende Elemente dar, welche die Überdehnung der Membran verhindern.

Die Mittel könnten eine Art Dämpfungskanal umfassen oder mit einem Dämpfungskanal wirkverbunden sein. Dabei ist denkbar, dass der Dämpfungskanal konzentrisch um den Kanal, welcher als Tilgerkanal fungiert, angeordnet ist. Hierdurch wird eine zusätzliche Führung der Fluidsäule erzielt. Der Dämpfungskanal erlaubt den Durchtritt des Fluids aus dem ersten Raum in einen Raum, der sich an den ersten Raum anschließt. Der Dämpfungskanal beeinflusst je nach seiner geometrischen Ausgestaltung die Steifigkeit des Hydrolagers. Werden die Durchgänge im Dämpfungskanal sehr klein gewählt, so wirkt die Dämpfung bei niedrigen Frequenzen und das Lager verhält sich oberhalb einer Frequenz maximaler Dämpfung als verhärtendes Lager, da die Fluidmasse im langen Kanal zu träge ist.

Der Dämpfungskanal könnte vor diesem Hintergrund als Doppelstockkanal mit einer Membranteilung ausgebildet sein. Die Membran innerhalb des Dämpfungskanals erhöht die Dämpfungswirkung des Dämpfungskanals.

Der als Tilgerkanal fungierende Kanal, in welchem die Fluidsäule geführt wird, könnte mittig angeordnet sein. Dabei ist insbesondere denkbar, dass der Kanal koaxial zur Hydrolagerachse angeordnet ist. Diese konkrete Ausgestaltung erlaubt eine direkte Übertragung der am Hydrolager angreifenden Kräfte auf die Fluidsäule. Insoweit ist die Tilgungswirkung der Fluidmasse innerhalb der Fluidsäule optimal ausgenutzt, da die träge Masse der Fluidsäule direkt mit einem axial angeordneten Anschlusselement wechselwirken kann.

Der Kanal könnte eine Tiefe aufweiser, die größer ist als dessen Breite. Diese konkrete Ausgestaltung ist von Vorteil, wenn man eine besonders lange Fluidsäule realisieren möchte, um im Leerlaufbereich Frequenzen im Bereich von 25 bis 80 Hz zu dämpfen. Vor diesem Hintergrund ist auch denkbar, die Breite des Kanals so zu wählen, dass diese größer ist als dessen Tiefe. Diese konkrete Ausgestaltung ist zur Unterdrückung von Frequenzen im Bereich von z.B. 150 Hz von Vorteil.

Die Federanordnung könnte ein Elastomer umfassen, welches einen durch dessen Federeigenschaften vergrößerbaren und verkleinerbaren Raum, nämlich die Arbeitskammer, begrenzt. Dabei ist insbesondere denkbar, dass das Elastomer am oberen Ende oder unteren Ende des Hydrolagers angeordnet ist und ein Anschlusselement aufnimmt. Das Anschlusselement könnte an das Elastomer anvulkanisiert sein, wobei das Elastomer selbst an das Gehäuse des Elastomers anvulkanisiert sein könnte. Diese konkrete Ausgestaltung erlaubt die Nutzung der elastischen Eigenschaften des Elastomers zur Isolation in einem speziellen Frequenzbereich. An den ersten Raum, welcher vom Elastomer begrenzt wird, könnte sich ein zweiter mit Fluid befüllter Raum anschließen. Hierdurch ist realisierbar, dass bei Kraftbeaufschlagung des Elastomers das Fluid von einem ersten Raum in einen zweiten Raum strömen kann. Es gibt eine Reihe von Konstruktionen, in denen eine Gummifeder unten angeordnet ist und mit der Karosserie verbunden ist. Dabei fungiert die Karosserie als Hilfsrahmen. Der Grund hierfür ist, dass günstigere Temperaturverhältnisse und ein besseres Schwingungsverhalten realisierbar sind.

Dieser zweite Raum könnte durch eine zweite zumindest teilweise flexible Membran begrenzt sein. Diese zweite flexible Membran könnte als Rollbalg zur Fluidaufnahme ausgestaltet sein. Der Rollbalg könnte sich in eine Ausgleichskammer oder in einen nach unten offenen Raum erstrecken. Diese konkrete Ausgestaltung erlaubt die dämpfende Aufnahme eines Fluids, welches vom ersten Raum in den zweiten Raum strömt.

Die erste Membran, welche sich von der Arbeitskammer aus erstreckt, und die zweite Membran, welche als Rollbalg ausgebildet sein könnte, könnten einstückig ausgebildet sein. Eine solche Ausgestaltung ist im Hinblick auf eine kostengünstige Fertigung des Hydrolagers von Vorteil. Des Weiteren hat diese Ausgestaltung den Vorteil, dass Dichtungsmaßnahmen zwischen dem oberen Teil des Hydrolagers und dem unteren Teil minimiert werden.

Zwischen dem ersten Raum und dem zweiten Raum könnte eine dritte Membran angeordnet sein. Die Vorkehrung einer dritten Membran hat den Vorteil, dass diese die Isolation akustisch wahrnehmbarer Frequenzen bewirken könnte. Insoweit ist ein Zusammenspiel mehrerer elastischer Elemente realisierbar, wobei jedes Element in einem speziellen Frequenzbereich wirksam wird.

Die dritte Membran könnte sich in einen zweistöckigen Dämpfungskanal erstrecken und diesen in zwei Stöcke teilen. Diese konkrete Ausgestaltung erlaubt eine besonders kostengünstige Fertigung des Hydrolagers, da letztlich nur eine Membran für zwei Funktionen verwendbar ist. Bei dieser konkreten Ausgestaltung ist denkbar, dass die dritte Membran im Bereich der Außenwandung des Dämpfungskanals eine Verjüngung aufweist, welche deren Entkopplung vom Membranbereich innerhalb des Dämpfungskanals dient. Hierdurch ist vorteilhaft realisiert, dass eine Membran innerhalb des Dämpfungskanals Dämpfungsfunktionen wahrnehmen kann, ohne deren Funktionen außerhalb des Dämpfungskanals zu beeinflussen.

Die dritte Membran und die erste Membran könnten einstückig ausgebildet sein. Dabei ist insbesondere denkbar, dass die Membran, welche sich in den mit der Schaltkammer kommunizierenden Raum erstreckt, durch Klemmstellen von der dritten Membran schwingungstechnisch entkoppelt ist. Diese konkrete Ausgestaltung realisiert einerseits die Verwendung nur einer Membran und somit eine kostengünstige Fertigung, und andererseits die Aufteilung der Membran in zwei funktionell völlig getrennte Bereiche. Dabei dient der Bereich innerhalb des Raums, welcher mit der Schaltkammer kommuniziert, der Realisierung einer Tilgung durch eine schwingende Fluidsäule und der andere der Entkopplung im Bereich akustisch wahrnehmbarer Frequenzen.

Durch eine Schalteinrichtung könnten vier Betriebszustände des Hydrolagers einstellbar sein. Die elektronische Schalteinrichtung könnte zur Steuerung der Druckbeaufschlagung der Schaltkammer vorgesehen sein. Diese Steuerung könnte durch eine Unterdruckquelle, zum Beispiel den Unterdruck in einem Saugrohr oder einer Vakuumpumpe, erfolgen. Die Unterdruckquellen könnten in der Bremsanlage, der Zentralverriegelung oder anderen Betätigungseinrichtungen eines Kraftfahrzeugs integriert sein. Diese konkrete Ausgestaltung ermöglicht die Verwendung von Elementen, welche bereits in einem Kraftfahrzeug vorgesehen sind. Die Vorkehrung einer elektronischen Schalteinrichtung ist dahingehend von Vorteil, dass die Arbeitskammer besonders exakt und definiert ansteuerbar ist.

Die Schalteinrichtung könnte ein Schaltventil umfassen, welches vier Betriebszustände des Hydrolagers einstellen kann. Dabei ist auch denkbar, dass das Schaltventil weniger oder mehr Betriebszustände des Hydrolagers einstellt. Das Schaltventil könnte besonders dicht an der Schaltkammer installiert sein, um Toträume in Zuleitungen zu vermeiden.

Das Schaltventil könnte die Schaltkammer von der Atmosphäre druckdefiniert abtrennen. Hierdurch ist realisierbar, dass innerhalb der Schaltkammer ein Luftvolumen eingeschlossen wird, welches im Sinne eines Luftpolsters komprimierbar ist. Das Schaltventil könnte die Schaltkammer mit der Atmosphäre verbinden. Hierdurch ist realisierbar, dass die innerhalb der Schaltkammer eintauchende Fluidmasse allein durch die elastischen Eigenschaften der ersten Membran gelagert wird. Das Schaltventil könnte die Schaltkammer mit Unterdruck beaufschlagen. Hierbei ist insbesondere denkbar, dass das Schaltventil ein Vakuum innerhalb der Schaltkammer erzeugt. Die Vorkehrung eines Vakuums bewirkt, dass die erste Membran an den Boden der Schaltkammer gezogen wird und insoweit elastisch vorgespannt ist. Je nach Stärke des Unterdrucks kann die erste Membran nur elastisch vorgespannt, jedoch mit Abstand zum Boden oder direkt am Boden anliegend, angeordnet werden. Wenn die erste Membran direkt am Boden anliegt, kann die Fluidmasse innerhalb des mit der Schaltkammer kommunizierenden Raumes nicht mehr schwingen. Insoweit ist ein besonders steifes Hydrolager realisiert. Dieses arbeitet wie ein normales Hydrolager mit oder ohne Hochfrequenzentkoppelung durch eine bewegliche Membran, welche zwischen zwei Gittern angeordnet ist, welche die Arbeits- von der Ausgleichskammer trennen.

Die Druckbeaufschlagung könnte getaktet erfolgen. Diese konkrete Ausgestaltung erlaubt eine besonders rasche Anpassung der Tilgungseigenschaften des Hydrolagers an den jeweiligen Motorbetriebszustand und die Schwingungen aufgrund des Kurbeltriebs und der Verbrennung. Beim Kurbeltrieb treten freie Massenkräfte und Massenmomente auf.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert.

### Kurzbeschreibung der Zeichnung

In der Zeichnung zeigen
- Fig. 1: ein Hydrolager mit einem membrangeteilten Dämpfungskanal,
- Fig. 2: ein Hydrolager mit einer schematisch gezeigten elektronischen Schalteinrichtung zur Druckbeaufschlagung der Schaltkammer,
- Fig. 3: ein Hydrolager mit einem länglichen Kanal für die Tilgerfunktion,
- Fig. 4: ein Hydrolager mit einem Tilgerkanal, dessen Breite ungefähr dessen Tiefe entspricht, und
- Fig. 5: ein Hydrolager mit einem Tilgerkanal, dessen Breite deutlich größer ist als dessen Tiefe.

### Ausführung der Erfindung

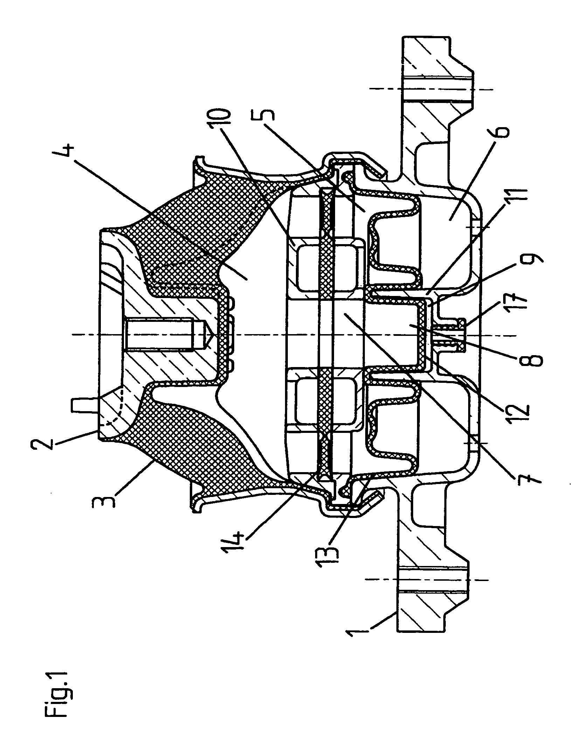

Fig. 1 zeigt ein Hydrolager mit Anschlusselementen 1, 2, welche mittels einer Federanordnung federnd und relativ beweglich zueinander anordenbar sind. Die Federanordnung umfasst ein Elastomer 3, welches einen ersten Raum 4, nämlich die Arbeitskammer, nach oben begrenzt. An den Raum 4, welcher mit Fluid befüllt ist, schließt sich ein Raum 5 an. Koaxial zur Längsachse des Hydrolagers ist ein Kanal 7 ausgebildet, welcher der Führung einer Fluidmenge vom ersten Raum 4 in einen weiteren Raum 8 dient, welcher mit einer pneumatischen Schaltkammer 9 kommuniziert. Der Kanal 7 wird durch Mittel 10 und 11 gebildet, welche Teile einer Trennwand oder separater Trennwände sind. In den Raum 8, welcher mit der pneumatischen Schaltkammer 9 kommuniziert, erstreckt sich sackartig eine teilweise flexible erste Membran 12. Die erste Membran 12 ist einstückig mit einer zweiten zumindest teilweise flexiblen Membran 13 verbunden, welche als Rollbalg ausgestaltet ist und den Raum 5 nach unten begrenzt.

Die Mittel 10 und 11 sind konzentrisch zum Kanal 7 angeordnet und als im Wesentlichen zylindrische Segmente ausgebildet. Das Mittel 11 ist als Stützwandung ausgebildet, an die sich die Membran 12 anlegen kann. Das Mittel 10 ist als Dämpfungskanal ausgebildet, welcher einen Doppelstockkanal mit Membranteilung enthält.

Der Kanal 7 weist eine Breite auf, die geringer ist als seine Tiefe.

Zwischen dem ersten Raum 4 und dem zweiten Raum 5 ist eine dritte Membran 14 angeordnet. Die dritte Membran 14 erstreckt sich in das Mittel 10 und teilt dieses in zwei Stöcke. Die Membran 14 weist im Bereich der Außenwandung des Mittels 10 eine Verjüngung auf.

Der Kanal 7 dient als Führung einer Fluidmenge vom ersten Raum 4 in den weiteren Raum 8, welcher mit der Schaltkammer 9 kommuniziert.

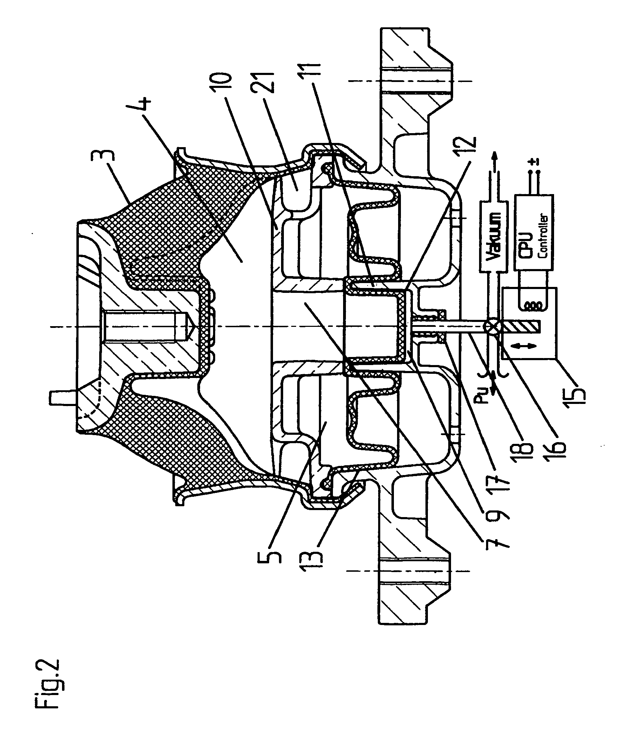

Fig. 2 zeigt ein Hydrolager ohne dritte Membran, also ohne Entkopplungsmembran. Fig. 2 zeigt des Weiteren schematisch eine elektronische Schalteinrichtung 15 zur Druckbeaufschlagung der Schaltkammer 9. Die Schalteinrichtung 15 umfasst ein Schaltventil 16, welches vier Betriebszustände des Hydrolagers einstellen kann. Die Schalteinrichtung 15 ist einem Anschluss 17 zugeordnet, welcher mit der Arbeitskammer 9 wirkverbunden ist. Die Schalteinrichtung 15 gemäß Fig. 2 ist dem Hydrolager gemäß Fig. 1 an dessen Anschluss 17 zuordenbar. Das Schaltventil 16 kann die Schaltkammer 9 von der Atmosphäre druckdefiniert abtrennen, mit der Atmosphäre verbinden und mit Unterdruck oder Überdruck beaufschlagen. Die Druckbeaufschlagung kann getaktet erfolgen. Das Schaltventil 16 ist als elektromagnetisches Ventil ausgestaltet. Die Wirkungsweise des Hydrolagers gemäß Fig. 1 in Verbindung mit der Schalteinrichtung 15 gemäß Fig. 2 ist wie folgt:

In einem ersten Betriebszustand hält das Schaltventil 16 die Steuerleitung 18 bei Atmosphärendruck geschlossen. Insoweit herrscht in der Schaltkammer 9 Atmosphärendruck. Im Hydrolager wirkt die Membran 14 dämpfend und fungiert als Entkopplungsmembran. Die erste Membran 12, welche als Tilgerschaltmembran fungiert, verformt sich durch auf das Fluid ausgeübten Druck derart, dass sie die Luft in der Schaltkammer 9 komprimiert. Der Luftdruck in der Schaltkammer 9 und die Elastizität der ersten Membran 12 fungieren als Feder, wobei die Fluidmasse im Tilgerkanal einen Tilger darstellt, den man bei mittleren Frequenzen oberhalb der Leerlaufdrehzahl eines Motors beispielsweise gegen Dröhnen oder Vibrationen einsetzen kann. Eine Dämpfung gegen Stuckern ist durch die teilentkoppelnde Membran 14, den Dämpfungskanal im Mittel 10 und die durch das Luftpolster gestützte erste Membran 12 gegeben.

In einem zweiten Betriebszustand verbindet das Schaltventil 16 die Schaltkammer 9 mit der Atmosphäre. Insoweit herrscht in der Schaltkammer 9 stets Atmosphärendruck vor. Folglich ist die Dämpfung, welche durch die erste Membran 12 bewirkt werden kann, gegenüber Betriebszustand 1 reduziert. Insoweit fungiert die Fluidmasse als Tilger, welcher mit mittleren Frequenzen durch den Kanal 7 schwingt. Dieser Frequenzbereich ist niedriger als bei Betriebszustand 1. Das Hydrolager arbeitet daher akustisch weicher als bei Betriebszustand 1. Wenn die Schaltkammer 9 hinreichend klein bemessen ist, ist die Dämpfungswirkung bei großen Anregungsamplituden erhöht, da sich die erste Membran 12 am topfähnlichen Widerlager der Stützwandung 11 anlegt und die Membran 12 nicht mehr weiter dehnbar ist.

Im Betriebszustand 3 verbindet das Schaltventil 16 die Schaltkammer 9 derart mit Unterdruck, dass die erste Membran 12 an der als Widerlager wirkenden Stützwandung 11 mit Boden anliegt. Hierdurch ist der Kanal 7 als Tilgerkanal stillgelegt, da durch das Vakuum eine quasi starre Wand entsteht und die Schaltkammer 9 kein Ausweichvolumen mehr zur Verfügung stellt.
Das Hydrolager arbeitet wie eine Ausführung ohne Schalteinrichtung 15. Die akustische Entkopplung kann durch die Membran 14 hergestellt werden. Die Dämpfungswirkung, die durch den Dämpfungskanal des Mittels 10 bewirkt wird, erreicht ihre größte Effektivität. Dies ist insbesondere dann der Fall, wenn die Membran durch eine starre Wand ersetzt wird.

In Betriebszustand 4 lässt ein schnelles Schaltventil 16 den Unterdruck in der Schaltkammer 9 so pulsieren, dass die Fluidmasse im Kanal 7 mit Hilfe der Schaltkammer 9 zum Schwingen gebracht wird. Die Schwingungsfrequenz dieser als Tilger fungierenden Fluidmasse ist so auf die Motoranregung abgestimmt, dass die Fluidmasse den Widerstand des Lagers phasenrichtig mit der Motoranregung absenkt. Das hydraulische Übersetzungsverhältnis vom Querschnitt des Kanals 7 zum Querschnitt des Elastomers 3 verstärkt diesen Effekt. Betriebszustand 4 beschreibt die Taktung eines Tilgers. Ist der Tilger auf den Leerlaufbereich eines Motors abgestimmt, ist im Hydrolager normalerweise die Stuckerdämpfung reduziert, da die zu tilgenden Schwingungen frequenzmäßig dicht an denen des Stuckerns und Mikrostuckerns liegen.
Ist der Kanal 7 auf höhere Frequenzen mit Hilfe der Membran 12 abgestimmt, wird eine Stuckerdämpfung verstärkt. Wenn die Motorelektronik der Frequenz der Anregung folgt, welche in der Regel proportional zur Motordrehzahl verläuft, erhält man einen mitlaufenden Tilger, welcher die Motorakustik verbessert und die Motorvibrationen reduziert.

Je nach Verhalten von Motor und Aggregatelagerungssystem müssen die Hydrolager nicht alle möglichen Betriebszustände realisieren können, so dass auch Hydrolager denkbar sind, welche nur zwei Betriebsarten realisieren können.

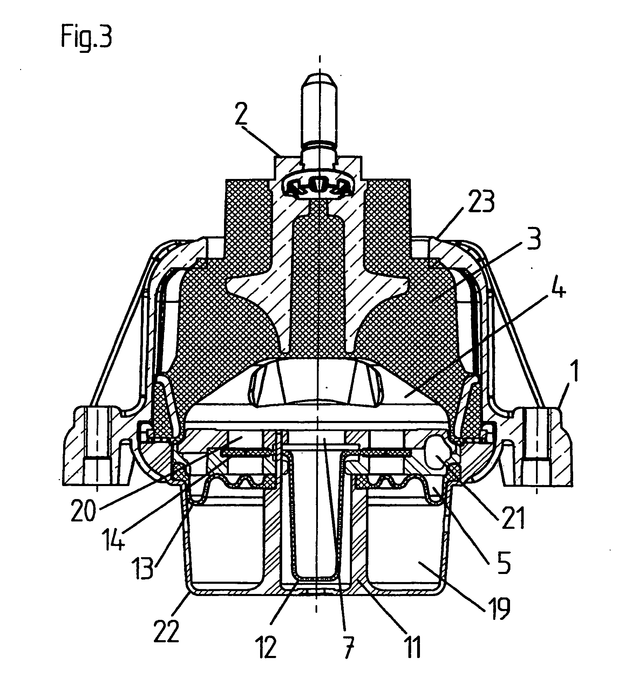

Fig. 3 zeigt ein Hydrolager, bei dem die dritte Membran 14 mit der ersten Membran 12 einstückig ausgebildet ist. Die mit Bezug auf Fig. 1 und Fig. 2 beschriebenen vier Betriebszustände sind bei diesem Hydrolager in ähnlicher Weise realisierbar. Die zweite Membran 13, welche als Rollbalg ausgestaltet ist, ist aus einem gasdichten Elastomer gefertigt. Zwischen einer Luftkammer 19 und Raum 5 ist eine Abdichtung vorgesehen, welche durch die zweite Membran 13 hergestellt ist. Die Tiefe des Kanals 7 ist größer als dessen Breite. Der Kanal 7 ist länglich ausgebildet.

Das Elastomer 3 ist in einer Aluminiumanschlagglocke 23 zur Wegbegrenzung aufgenommen. Die dritte Membran 14 wird durch ein Gitter 20 gestützt. Des Weiteren ist ein Dämpfungskanal 21 vorgesehen. Die Stützwandung 11 ist einteilig mit einem Deckel 22 ausgebildet, welcher durch eine Bördelung mit der Aluminiumanschlagglocke 23 verbunden ist.

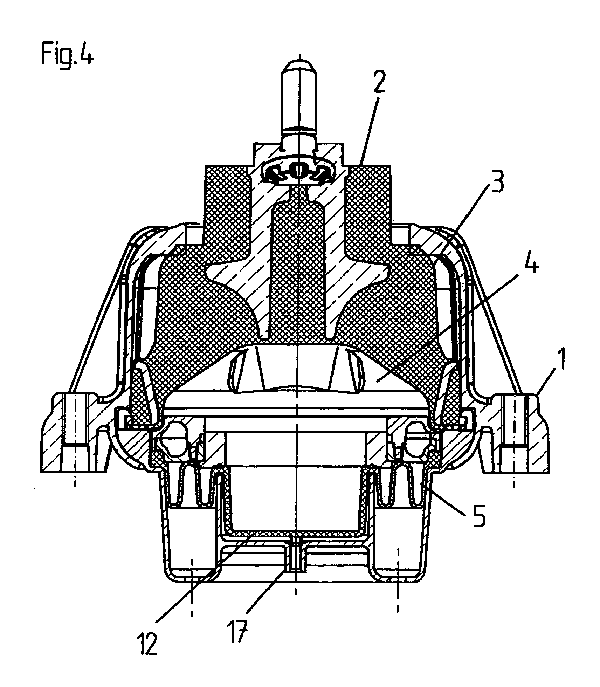

Fig. 4 zeigt ein Hydrolager, welches einen hochfrequenten Tilgereffekt erzielen kann. Bei hohen akustisch wahrnehmbaren Frequenzen um 150 Hz wird eine Tilgung benötigt, welche eines besonders großen Kanals 7 bedarf. Der Kanal 7 ist in Fig. 4 derart groß ausgelegt, dass für eine weitere dritte Membran für die akustische Hochfrequenzentkopplung kein Raum ist. Der große Durchmesser des Kanals 7 erlaubt jedoch gleichzeitig den Ersatz einer Membran 14 durch die Membran 12.

Eine gute Tilgerwirkung erfordert eine erhebliche Fluidmasse im Kanal 7 bei möglichst großer Kanaltiefe. Das Hydrolager gemäß Fig. 4 ist diesem Bedarf entsprechend ausgestaltet. Auch diese Ausgestaltung des Hydrolagers kann in den im Zusammenhang mit den Fig. 1 und Fig. 2 beschriebenen vier Betriebszuständen betrieben werden.

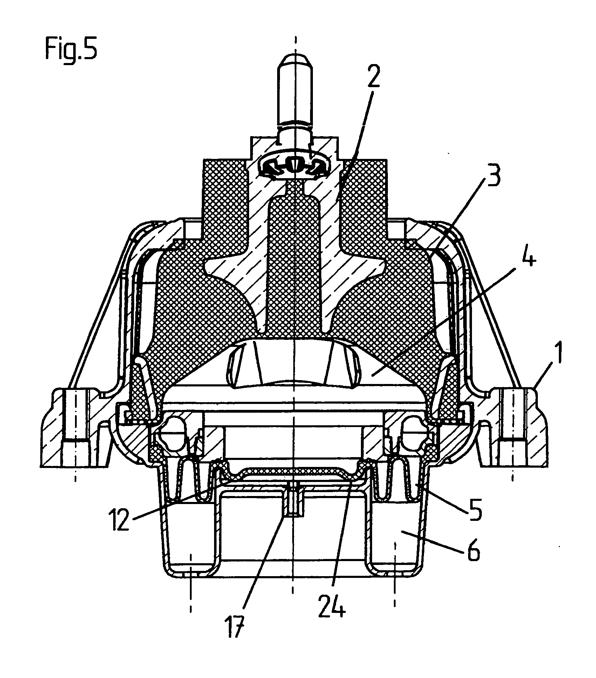

Fig. 5 zeigt ein Hydrolager, bei dem die sackartige erste Membran 12 derart ausgebildet ist, dass sie möglichst wenig Fluidmasse aufnimmt. Diese Ausgestaltung trägt der Tatsache Rechnung, dass ein Hydrolager bei Frequenzen oberhalb der Tilgerfrequenz eine durch Phasendrehung erzeugte Verhärtung aufweist. Hierbei wird die Akustik innerhalb des Fahrzeugs stark verschlechtert. Dieser Effekt kann dadurch minimiert werden, dass innerhalb der ersten Membran 12 möglichst wenig Fluidmasse aufgenommen ist. Um eine gute akustische Entkopplung durch die erste Membran 12 zu realisieren, ist diese mit einer konzentrisch umlaufenden Membranschlaufe 24 ausgestaltet, welche im unteren Bereich strukturiert ist.

Auch das Lager gemäß Fig. 5 kann in den vier Betriebszuständen betrieben werden, die im Rahmen der Beschreibung der Fig. 1 und Fig. 2 erläutert wurden.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

Abschließend sei ganz besonders hervorgehoben, dass die zuvor rein willkürlich gewählten Ausführungsbeispiele lediglich zur Erörterung der erfindungsgemäßen Lehre dienen, diese jedoch nicht auf diese Ausführungsbeispiele einschränken.

## Patentansprüche

1. Hydrolager, umfassend Anschlusselemente (1, 2), welche mittels einer Federanordnung federnd und relativ beweglich zueinander anordenbar sind, mindestens einen mit Fluid gefüllten ersten Raum (4) und zumindest eine teilweise flexible erste Membran (12), welche sich in mindestens einen weiteren Raum (8) erstreckt, der mit einer pneumatischen Schaltkammer (9) kommuniziert, wobei Mittel (10, 11) zur Bildung eines Kanals (7) vorgesehen sind, der als Führung einer Fluidmenge vom ersten Raum (4) in den weiteren Raum (8) fungiert, **dadurch gekennzeichnet, dass** die Membran (12) sackartig ausgestaltet ist und die Mittel (10, 11) derart konzentrisch zum Kanal (7) angeordnet sind, dass die Fluidmenge eine Fluidsäule ausbildet, welche an ihrem oberen Ende einen größeren Querschnitt aufweist als an ihrem unteren Ende.

2. Hydrolager nach Anspruch 1, **dadurch gekennzeichnet, dass** die Mittel (10, 11) als zylindrische Segmente ausgebildet sind.

3. Hydrolager nach Anspruch 1 oder 2, **dadurch gekennzeichnet, dass** die Mittel (10, 11) eine Stützwandung (11) umfassen, an weiche die Membran (12) anlegbar ist.

4. Hydrolager nach einem der Ansprüche 1 bis 3, **dadurch gekennzeichnet, dass** die Mittel (10) einen Dämpfungskanal (21) umfassen oder mit einem Dämpfungskanal (21) wirkverbunden sind.

5. Hydrolager nach Anspruch 4, **dadurch gekennzeichnet, dass** der Dämpfungskanal (21) als Doppelstockkanal mit Membranteilung ausgebildet ist.

6. Hydrolager nach einem der Ansprüche 1 bis 5, **dadurch gekennzeichnet, dass** der Kanal (7) koaxial zur Hydrolagerachse angeordnet ist.

7. Hydrolager nach einem der Ansprüche 1 bis 6, **dadurch gekennzeichnet, dass** der Kanal (7) eine Tiefe aufweist, die größer ist als dessen Breite.

8. Hydrolager nach einem der Ansprüche 1 bis 6, **dadurch gekennzeichnet, dass** der Kanal (7) eine Breite aufweist, die größer ist als dessen Tiefe.

9. Hydrolager nach einem der Ansprüche 1 bis 8, **dadurch gekennzeichnet, dass** die Federanordnung ein Elastomer (3) umfasst, welches den ersten Raum (4) begrenzt.

10. Hydrolager nach einem der Ansprüche 1 bis 9, **dadurch gekennzeichnet, dass** sich an den ersten Raum (4) ein zweiter mit Fluid befüllter Raum (5) anschließt.

11. Hydrolager nach Anspruch 10, **dadurch gekennzeichnet, dass** der zweite Raum (5) durch eine zweite zumindest teilweise flexible Membran (13) begrenzt ist.

12. Hydrolager nach Anspruch 11, **dadurch gekennzeichnet, dass** die erste Membran (12) und die zweite Membran (13) einstückig ausgebildet sind.

13. Hydrolager nach einem der Ansprüche 11 oder 12, **dadurch gekennzeichnet, dass** zwischen dem ersten Raum (4) und dem zweiten Raum (5) eine dritte Membran (14) angeordnet ist.

14. Hydrolager nach Anspruch 13, **dadurch gekennzeichnet, dass** die dritte Membran (14) sich in einen zweistöckigen Dämpfungskanal (21) erstreckt und diesen in zwei Stöcke teilt.

15. Hydrolager nach Anspruch 13, **dadurch gekennzeichnet, dass** die dritte Membran (14) und die erste Membran (12) einstückig ausgebildet sind.

16. Hydrolager nach einem der Ansprüche 1 bis 15, **gekennzeichnet durch** eine elektronische Schalteinrichtung (15), **durch** welche vier Betriebszustände des Hydrolagers einstellbar sind.

17. Hydrolager nach Anspruch 16, **dadurch gekennzeichnet, dass** die Schalteinrichtung (15) ein Schaltventil (16) zur Druckbeaufschlagung der Schaltkammer (9) umfasst.

18. Hydrolager nach Anspruch 17, **dadurch gekennzeichnet, dass** durch das Schaltventil (16) die Schaltkammer (9) von der Atmosphäre druckdefiniert abtrennbar, mit der Atmosphäre verbindbar und mit Unterdruck oder Überdruck beaufschlagbar ist.

19. Hydrolager nach Anspruch 17 oder 18, **dadurch gekennzeichnet, dass** die Druckbeaufschlagung taktbar ist.

## Claims

1. Hydraulic mount, comprising connection elements (1, 2) which can be arranged elastically and so as to be movable relative to one another by means of a spring arrangement, at least one first space (4) filled with fluid, and at least one partly flexible first diaphragm (12) which extends into at least one further space (8) which communicates with a pneumatic control chamber (9), means (10, 11) being provided for forming a passage (7) which serves to direct a fluid quantity from the first space (4) into the further space (8), **characterized in that** the diaphragm (12) is of sack-like design and the means (10, 11) are arranged concentrically to the passage (7) in such a way that the fluid quantity forms a fluid column which has a larger cross section at its top end than at its bottom end.

2. Hydraulic mount according to Claim 1, **characterized in that** the means (10, 11) are designed as cylindrical segments.

3. Hydraulic mount according to Claim 1 or 2,
**characterized in that** the means (10, 11) comprise a supporting wall (11), against which the diaphragm (12) can be placed.

4. Hydraulic mount according to one of Claims 1 to 3, **characterized in that** the means (10) comprise a damping passage (21) or are operatively connected to a damping passage (21).

5. Hydraulic mount according to Claim 4, **characterized in that** the damping passage (21) is designed as a double-deck passage with diaphragm division.

6. Hydraulic mount according to one of Claims 1 to 6, **characterized in that** the passage (7) is arranged coaxially to the hydraulic mount axis.

7. Hydraulic mount according to one of Claims 1 to 6, **characterized in that** the passage (7) has a depth which is greater than its width.

8. Hydraulic mount according to Claims 1 to 6, **characterized in that** the passage (7) has a width which is greater than its depth.

9. Hydraulic mount according to one of Claims 1 to 8, **characterized in that** the spring arrangement comprises an elastomer (3) which defines the first space (4).

10. Hydraulic mount according to one of Claims 1 to 9, **characterized in that** a second space (5) filled with fluid adjoins the first space (4).

11. Hydraulic mount according to Claim 10, **characterized in that** the second space (5) is defined by a second at least partly flexible diaphragm (13).

12. Hydraulic mount according to Claim 11, **characterized in that** the first diaphragm (12) and the second diaphragm (13) are designed in one piece.

13. Hydraulic mount according to either of Claims 11 and 12, **characterized in that** a third diaphragm (14) is arranged between the first space (4) and the second space (5).

14. Hydraulic mount according to Claim 13, **characterized in that** the third diaphragm (14) extends into a double-deck damping passage (21) and divides the latter into two decks.

15. Hydraulic mount according to Claim 13, **characterized in that** the third diaphragm (14) and the first diaphragm (12) are designed in one piece.

16. Hydraulic mount according to one of Claims 1 to 15, **characterized by** an electronic control device (15), by means of which four operating states of the hydraulic mount can be set.

17. Hydraulic mount according to Claim 16, **characterized in that** the control device (15) comprises a control valve (16) for pressurizing the control chamber (9).

18. Hydraulic mount according to Claim 17, **characterized in that**, by means of the control valve (16), the control chamber (9) can be separated from the atmosphere in a pressure-defined manner, can be connected to the atmosphere and can be acted upon by vacuum or positive pressure.

19. Hydraulic mount according to Claim 17 or 18, **characterized in that** the pressurizing can be pulsed.

## Revendications

1. Support hydraulique comprenant des éléments de raccordement (1, 2) qui peuvent être disposés au moyen d'un agencement de ressort de manière élastique et relativement mobile l'un par rapport à l'autre, au moins un premier espace (4) rempli de fluide et au moins une première membrane (12) partiellement flexible qui s'étend dans au moins un autre espace (8), qui communique avec une chambre de commande pneumatique (9), des moyens (10, 11) pour former un canal (7) étant prévus, ce canal servant à guider une quantité de fluide du premier espace (4) dans l'autre espace (8), **caractérisé en ce que** la membrane (12) est configurée en forme de sac et les moyens (10, 11) sont disposés concentriquement au canal (7) de telle sorte que la quantité de fluide forme une colonne de fluide qui présente à son extrémité supérieure une plus grande section transversale qu'à son extrémité inférieure.

2. Support hydraulique selon la revendication 1, **caractérisé en ce que** les moyens (10, 11) sont réalisés sous forme de segments cylindriques.

3. Support hydraulique selon la revendication 1 ou 2, **caractérisé en ce que** les moyens (10, 11) comprennent une paroi de support (11) contre laquelle la membrane (12) peut s'appliquer.

4. Support hydraulique selon l'une quelconque des revendications 1 à 3, **caractérisé en ce que** les moyens (10) comprennent un canal d'amortissement (21) ou sont en liaison coopérante avec un canal d'amortissement (21).

5. Support hydraulique selon la revendication 4, **caractérisé en ce que** le canal d'amortissement (21) est réalisé sous la forme d'un canal à deux niveaux avec une division par membrane.

6. Support hydraulique selon l'une quelconque des revendications 1 à 5, **caractérisé en ce que** le canal (7) est disposé coaxialement à l'axe du support hydraulique.

7. Support hydraulique selon l'une quelconque des revendications 1 à 6, **caractérisé en ce que** le canal (7) présente une profondeur qui est supérieure à sa largeur.

8. Support hydraulique selon l'une quelconque des revendications 1 à 6, **caractérisé en ce que** le canal (7) présente une largeur qui est supérieure à sa profondeur.

9. Support hydraulique selon l'une quelconque des revendications 1 à 8, **caractérisé en ce que** l'agencement de ressort comprend un élastomère (3) qui délimite le premier espace (4).

10. Support hydraulique selon l'une quelconque des revendications 1 à 9, **caractérisé en ce qu'**un deuxième espace (5) rempli de fluide se raccorde au premier espace (4).

11. Support hydraulique selon la revendication 10, **caractérisé en ce que** le deuxième espace (5) est limité par une deuxième membrane (13) au moins partiellement flexible.

12. Support hydraulique selon la revendication 11, **caractérisé en ce que** la première membrane (12) et la deuxième membrane (13) sont réalisées d'une seule pièce.

13. Support hydraulique selon l'une quelconque des revendications 11 ou 12, **caractérisé en ce que** l'on dispose une troisième membrane (14) entre le premier espace (4) et le deuxième espace (5).

14. Support hydraulique selon la revendication 13, **caractérisé en ce que** la troisième membrane (14) s'étend dans un canal d'amortissement à deux niveaux (21) et le divise en deux niveaux.

15. Support hydraulique selon la revendication 13, **caractérisé en ce que** la troisième membrane (14) et la première membrane (12) sont réalisées d'une seule pièce.

16. Support hydraulique selon l'une quelconque des revendications 1 à 15, **caractérisé par** un dispositif de commande électronique (15), qui permet d'ajuster quatre états de fonctionnement du support hydraulique.

17. Support hydraulique selon la revendication 16, **caractérisé en ce que** le dispositif de commande (15) comprend une soupape de commande (16) pour solliciter en pression la chambre de commande (9).

18. Support hydraulique selon la revendication 17, **caractérisé en ce que** la chambre de commande (9) peut être séparée de l'atmosphère par la soupape de commande (16) de manière définie en pression, peut être raccordée à l'atmosphère et peut être sollicitée avec une dépression ou une surpression.

19. Support hydraulique selon la revendication 17 ou 18, **caractérisé en ce que** la sollicitation en pression peut être cadencée.
